# EUROPEAN PATENT SPECIFICATION

(11) **EP 2 628 611 B1**
(45) Date of publication and mention of the grant of the patent: **16.09.2015**
(21) Application number: 13155186.3
(22) Date of filing: 14.02.2013
(51) Int. Cl.: B60B 3/10, B21D 53/26, B60B 3/04

(54) **A method for producing a disc of a vehicle wheel**
Verfahren zur Herstellung einer Scheibe eines Fahrzeugrads
Procédé de production d'un disque de roue de véhicule

(30) Priority: 16.02.2012 IT TO20120137
(43) Date of publication of application: 21.08.2013
(73) Proprietor: MW Italia S.r.l., 10098 Rivoli (TO) (IT)
(72) Inventor: Gotta, Giacomo, I-10080 Locana (Torino) (IT); Valente, Federico, I-14100 Asti (IT); Rovarino, Davide Fabio, I-10071 Borgaro Torinese (Torino) (IT); Perris Magnetto, Gabriele, I-10098 Rivoli (Torino) (IT)
(74) Representative: Vanzini, Christian

(56) References cited:
- EP-A1- 1 655 089
- WO-A1-01/39909
- US-A1- 2007 175 038

## Description

The present invention generally relates to vehicle wheels, of the type comprising discrete disc and rim, which are assembled and secured together to obtain the finished wheel.

More particularly, the present invention relates to the productive processes of the discs, whereby a disc is obtained by forming and punching, starting from a sheet piece. The so-obtained disc generally comprises a plurality of spokes extending radially outwardly from a central part of the disc, comprising a portion for the fixing operation to a hub. The peripheral portion of the disc can be continuous, by connecting the outer radially ends of the spokes to one another, or it can have discontinuities. A connection portion is obtained at such a peripheral portion, extending in the direction of the disc central axis, which is provided to connect the disc to a wheel rim. A corresponding disc opening or window is then obtained between each pair of adjacent spokes. US2007175038 A1 discloses a metohd for producing a disc of a vehicle wheel according to the preamble of claim 1. EP 1 655 089 discloses a method for producing a forged wheel, wherein a disc of the wheel is subjected to a punching operation and to subsequent forming operations to obtain the disc windows.

WO 01/39909 discloses a method for producing a forged wheel, wherein a disc of the wheel is subjected to a forming operation and to subsequent cutting operation to obtain the disc windows.

A method for producing a wheel disc is described in US 7 984 551. Such a known method provides that a disc with a finished geometrical profile is subjected to a punching operation in two or more stages to obtain the disc windows. Such a punching operation allows forming relatively wide windows, also by multiple punching planes.

Compared to the known method, it is desired to further increase the configuration freedom for the wheel disc.

According to the invention, such an object is achieved by a method for producing a disc of a vehicle wheel, comprising the following steps:
- providing a partially formed disc, defining a central axis;
- subjecting the disc to at least one first material removing operation to produce a plurality of first window portions angularly spaced-apart in the disc;
- after said first material removing operation, subjecting the disc to at least one finish forming operation to finish the geometrical profile of the disc in a windowing area of the disc; and
- after said forming operation, subjecting the disc to at least one second material removing operation to produce a plurality of second window portions angularly spaced-apart in said windowing area of the disc, each of the second window portions cooperating with a respective one of the first window portions to define a corresponding window comprised between a pair of adjacent spokes and a peripheral portion of the disc.

According to such a method, since the material removing operations occur partially before finishing the geometrical profile of the wheel disc (particularly, before finishing the geometrical profile of the windowing area of the disc), the design constraints provided for when producing the windows are significantly reduced compared to the solution that is the subject-matter of the US patent 7 984 551. Furthermore, the method according to the invention allows simplifying the operations for producing the wheel disc and improving the performance for the finished product, particularly with reference to fatigue strength and run-out tolerances.

Preferred embodiments of the invention are defined in the dependent claims, which are to be meant as an integral part of the present description.

Further characteristics and advantages of the method according to the invention will be more clearly apparent from the following detailed description of some implementation examples of the finding, given with reference to the appended drawings, which are given by way of illustrative, non-limiting example only, in which:
- Fig. 1 is a perspective view of a wheel produced by a method according to the invention;
- Figs. 2 and 3 are a plane view of the wheel of Fig. 1, and an axial sectional view according to the line III-III of Fig. 2, respectively;

- Fig. 4 is a perspective view of a disc of the wheel of Fig. 1;
- Fig. 5 is a block diagram illustrating a sequence of steps to produce a wheel disc according to the invention;
- Figs. 6a-d are sectional schematic views illustrating a method for producing a wheel disc according to the invention; and
- Fig. 7 is a sectional schematic view illustrating a punching and coning operation.

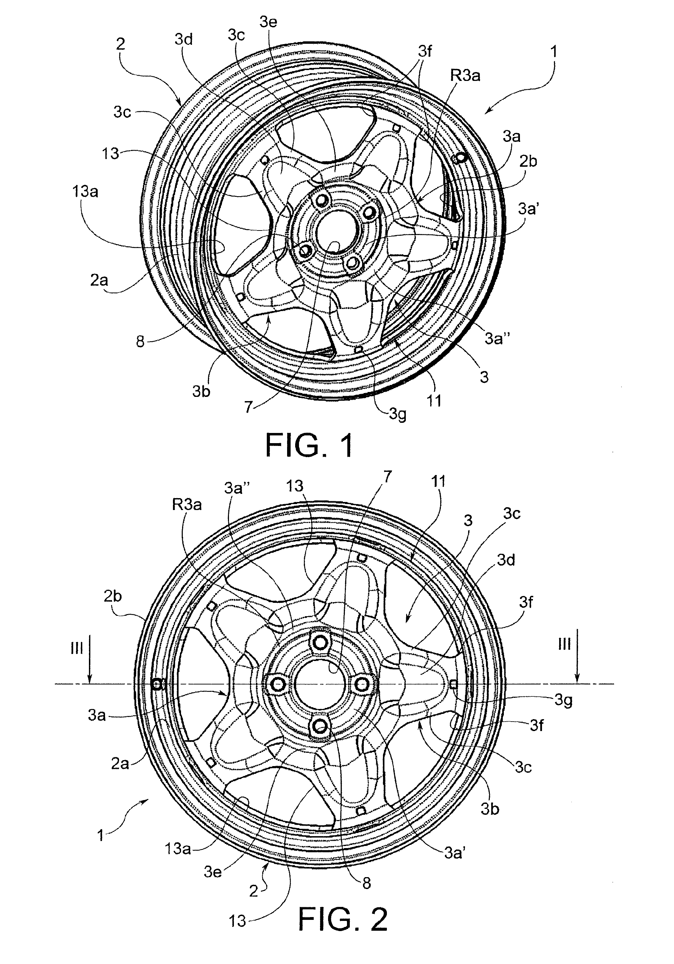

In the Figs. 1 to 3, a vehicle wheel is generally indicated by 1. The constructive details of the wheel and the components thereof are given by way of illustrative example only, not being the object of the present invention. As it will be understood herein below, by the method according to the invention it is possible to obtain wheel discs, and therefore wheels, which are significantly different from those illustrated in the Figures.

The wheel 1 comprises in a *per se* known manner a formed rim 2 of metal material, to which a disc 3 is welded, which is made of a single sheet piece by forming and punching.

The rim 2 has an outer annular surface 2a, for supporting a tire (not illustrated) and an inner annular surface 2b.

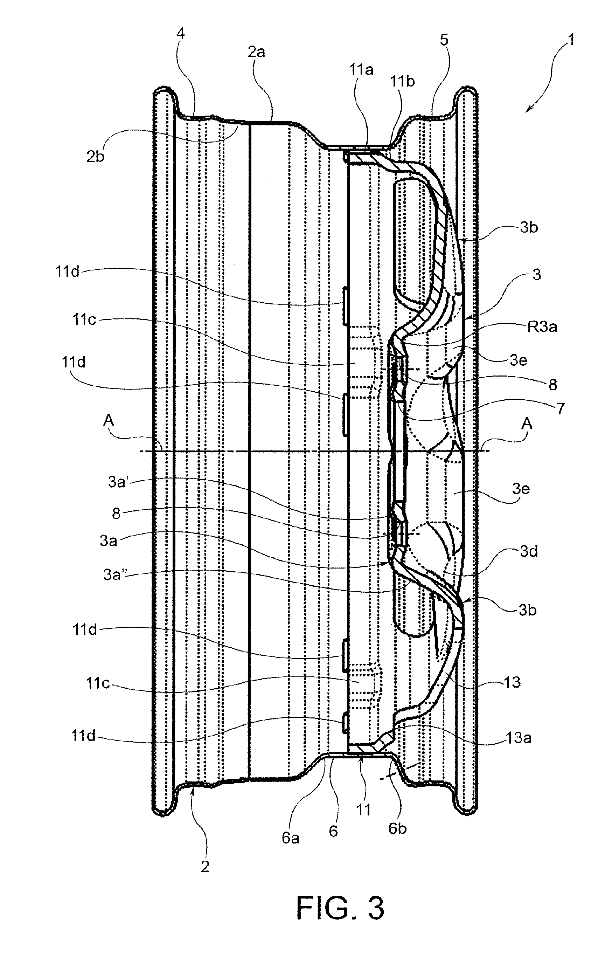

With particular reference to Fig. 3, the rim 2 has in cross-section a profile including two side seats 4, 5, respectively axially inner and axially outer seats, intended to receive corresponding tire beads, and an intermediate portion 6 with a channel lowered towards the wheel axis A-A. The intermediate portion 6 of the rim is defined by two joining arched portions 6a, 6b, respectively axially inner and axially outer portions, having concavities facing outwardly of the wheel.

The disc 3 has a central portion 3a for the connection to an axle hub (not illustrated). In the illustrated embodiment, the central portion 3a of the disc 3 comprises substantially a substantially planar assembling portion 3a', and a joining portion 3a" surrounding the assembling portion 3a'. The assembling portion 3a' has a central opening 7 and, around this, a plurality of holes 8 for the passage of tightening bolts. According to a plane view, such an assembling portion 3a' has substantially the shape of a circular crown. The joining portion 3a" defines a revolution surface about the wheel axis A-A that has in cross-section a curvilinear profile that, starting from the assembling portion 3a', extends axially outwardly of the wheel 1.

In the illustrated embodiment, the "boundary" between the assembling portion 3a' and the joining portion 3a" is defined by a circumferential groove R3a extending around the assembling portion 3a'.
From the joining portion 3a" of the central part 3a of the disc 3, a plurality of angularly spaced-apart spokes 3b extends outwardly.

The outer ends of the spokes 3b, at which the spokes 3b have a zone curved inwardly of the wheel, are interconnected by a peripheral connecting ring 11 extending concentrically with the axis A-A of the wheel 1. According to a non-illustrated embodiment, such a connecting ring may have discontinuities angularly distributed therealong.

Corresponding windows 13 of the disc 3 are defined between the connecting ring 11 and pairs of adjacent spokes 3b, which, in the embodiment illustrated by way of example, have, according to a plane view, an almost pentagonal shape with rounded vertexes.

With particular reference to the Figs. 1, 2, and 4, each spoke 3b comprises a pair of spoke ribs 3c interconnected by a spoke web 3d. According to a plane view, the spoke ribs 3c are arranged obliquely with respect to the center line of the relative spokes 3b, and particularly the two spoke ribs 3c of each spoke 3b are arranged so as to get closer to one another in the centrifugal direction.

Each spoke rib 3c is composed by a stiffening deformed part of the relative spoke 3b, projecting in the axial direction, and optionally also in the radial direction (in the peripheral areas of the disc at the curved zone of the spoke), with respect to the spoke web 3d adjacent thereto. In the circumferential direction, each spoke rib 3c adjoins on one side with one of the windows 13, and on the other side with the spoke web 3d adjacent thereto; therefore, it is comprised between the above-mentioned components.

The oblique arrangement of the spoke ribs 3c allows having, with respect to the parallel arrangement, a larger width of the windows 13, particularly at the radially peripheral part of such windows, with consequent higher air inlet to organs, such as brakes, which are possibly arranged within the wheel rim. Furthermore, such an arrangement promotes the forming process, allowing an easier and less heavy deformation of the sheet.

In the illustrated embodiment, the outer ends of the spokes 3b, at the curved zone of such spokes, are formed so as to have side edge portions 3f that, according to a plane view, extend rectilinearly to the separation portion 11b of the connecting ring 11, forming an angle > 0 with respect to the innermost adjacent edge portion of the spoke 3b. Such an arrangement, which allows obtaining the almost pentagonal shape of the windows 13, promotes and improves on one hand the cutting operations of the openings during the punching process and, on the other hand, increases the disc 3 strength at the windows 13 and, more generally, it increases the wheel rigidity, by adding material on the peripheral part of the disc.

The spoke ribs 3c are internally prolonged by an extent such that the spoke ribs 3c defining on opposite sides each of the openings 13 are mutually connected to form a rib "nose" 3e, connected to the assembling portion 3a' through the joining portion 3a".

As it can be noticed in the Figures, the number of spokes 3b is different and unrelated to the number of holes 8 of the assembling portion 3a' intended for the tightening bolts. Furthermore, such holes 8 are angularly unaligned with respect to the center lines of the spokes 3b. Moreover, in non-illustrated embodiments, the holes 8 could be in the same number as the spokes 3b, and optionally such holes could be aligned with a respective one of the spokes 3b.

The unrelatedness between the number of openings and the number of spokes, and the consequent higher designing freedom, are allowed by the fact that the rib nose 3e associated to each pair of spokes 3b does not reach the assembling portion 3a' in which the holes 8 are obtained, but tapers in the joining portion 3a" surrounding the assembling portion.

With reference particularly to Fig. 3, the connecting ring 11 of the disc 3 comprises a rim connecting portion 11a extending substantially in the direction of the axis A-A of the wheel 1. Such a rim connecting portion 11a is applied against the inner annular surface 2b of the rim 2 at the intermediate portion thereof.

The connecting ring 11 has a further portion 11b, which will be designed herein below as a separation portion, which is axially adjacent to the connection portion 11a and facing outwardly of the wheel 1. Such a separation portion 11b has in cross-section a curvilinear profile that, starting from the adjacent connection portion 11a, converges towards the axis A-A of the wheel 1.

The radially outer edge 13a of the windows 13 is defined by the separation portion 11b of the connecting ring 11. Consequently, such a radially outer edge 13a is arranged, with respect to the wheel axis A-A, at a lesser distance than that separating the rim connecting portion 11a from such axis.

With reference particularly to Fig. 3, the rim connecting portion 11a and, at least partially, the separation portion 11b of the connecting ring 11 are arranged at an axially more inner part with respect to the axially outer joining portion 6b adjacent to the rim intermediate portion 6. By virtue of such an arrangement, it is possible to obtain a significantly higher fatigue resistance compared to the conventional wheels, due to the fact that this allows avoiding the fretting phenomena affecting the interface zone between the connecting ring and the rim, and which generate cracks in the area of the axially outer joining portion.

In the illustrated embodiment (see particularly Fig. 3), the separation portion 11b has in cross-section a double arched profile, forming two consecutive curves, having respective concavities facing one towards the wheel axis A-A, and the other one outwardly of the wheel.

Such a profile allows significantly increasing the fatigue behaviour of the welding seams between disc 3 and rim, the arrangement of which will be illustrated in detail herein below. Furthermore, the double curvature provides a better definition of the connection portion of the connecting ring with respect to the inner part of the disc in which the spokes 3b and the windows 13 are obtained, with consequent improvement in terms of positioning accuracy of the disc 3 with respect to the rim 2.

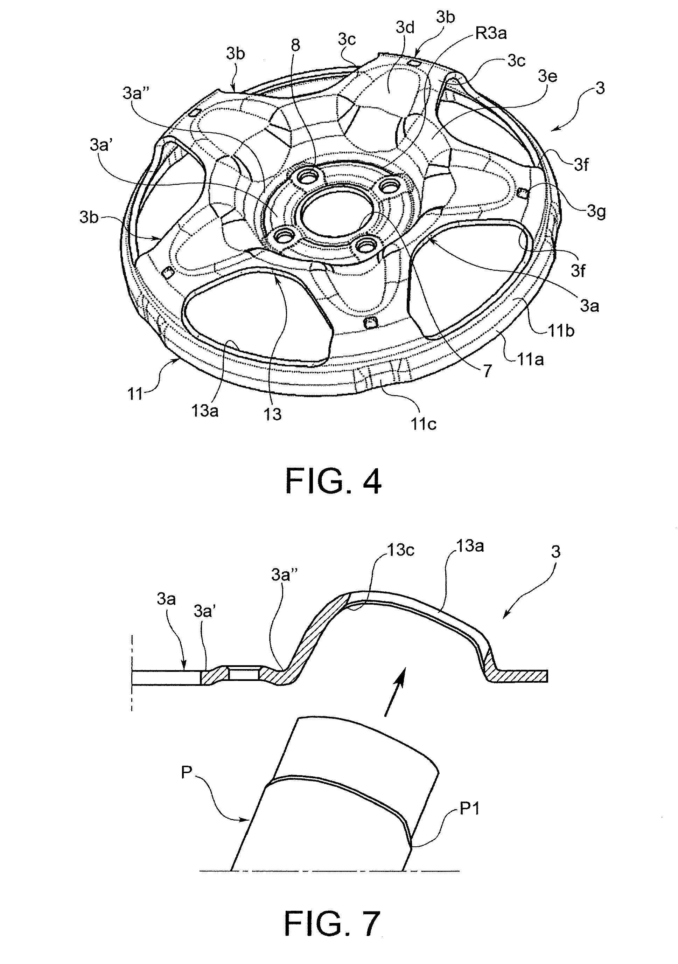

Moreover, in non-illustrated embodiments, the separation portion 11b of the connecting ring 11 could have a different profile, for example, a simply arched one with a single curvature, as the one described in EP 1 782 965.
With reference particularly to the Figs. 3 and 4, each spoke rib 3c, meant as the deformed and projecting part of a spoke 3b comprised between a window 13 and a spoke core 3d adjacent thereto, ends externally at most at the separation portion 11b of the connecting ring 11.

Consequently, and in the light of the above-described peculiar configuration of the disc central part 3a, the spoke ribs 3c are comprised between the joining portion 3a" of the central part 3a of the disc 3 and the separation portion 11b of the connecting ring, i.e., they do not reach, on one hand, the assembling portion 3a' of the central part 3a of the disc and, on the other hand, the rim connecting portion 11a of the connecting ring.

In the peripheral area in which the spoke rib 3c ends, the projection thereby defined glides into a disc zone composed by a revolution surface portion substantially concentric with the wheel axis A-A.

In the illustrated embodiment, the rim connecting portion 11a of the connecting ring 11 has a plurality of angularly spaced-apart local deformations 11c, at which the rim connecting portion 11a has recesses that are lowered towards the wheel axis A-A with respect to the generally cylindrical profile of the rim connecting portion 11a. Therefore, the above-mentioned local deformations 11c determine a non-continuous contact between disc 3 and rim 2, thereby generating peripheral passages therebetween.

Advantageously, such passages allow, during the cataphoretic painting of the wheel, to easily discharge the paint, avoiding the undesired build-up thereof in the contact area between the connecting ring 11 of the disc 3 and the rim 2. Furthermore, the presence of the local recesses 11c provides a better definition of the contact portion of the connecting ring in specific angular areas thereof, with a consequent improvement in terms of positioning accuracy of the disc 3 with respect to the rim 2.

In the illustrated embodiment, the above-mentioned local deformations 11c are in the same number of the spokes 3b, and they are arranged aligned therewith. According to non-illustrated embodiments, such local deformations 11c could also be arranged in angular positions corresponding to the angular positions of the windows 13, or they could be even different for number and position thereof.

As it can be noticed in Fig. 3, the disc 3 is secured to the rim 2 by a plurality of welding seams; particularly, there are two welding seams 11d for each spoke 3b, arranged, according to the circumferential direction, on opposite sides of the spoke. Such welding seams 11d can be arranged at the sides of the local deformations 11c, if present. According to non-illustrated embodiments, the welding seams could be arranged in angular positions that are mutually equidistant.

In the illustrated embodiment, a locally flattened portion 3g is obtained on each spoke 3b, at a peripheral zone thereof arranged in the radially innermost position with respect to the connecting ring 11 (and particularly, innermost with respect to the curved zone of the spoke).

The locally flattened portions 3g associated to the spokes 3b define reference and contact areas for an optional wheel covering member (not illustrated), promoting and improving the axial positioning of such a member.

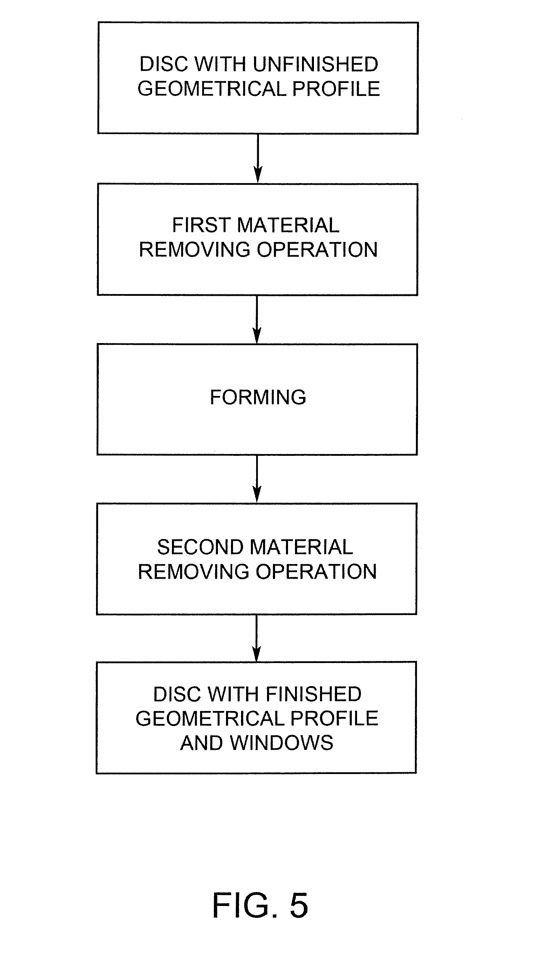

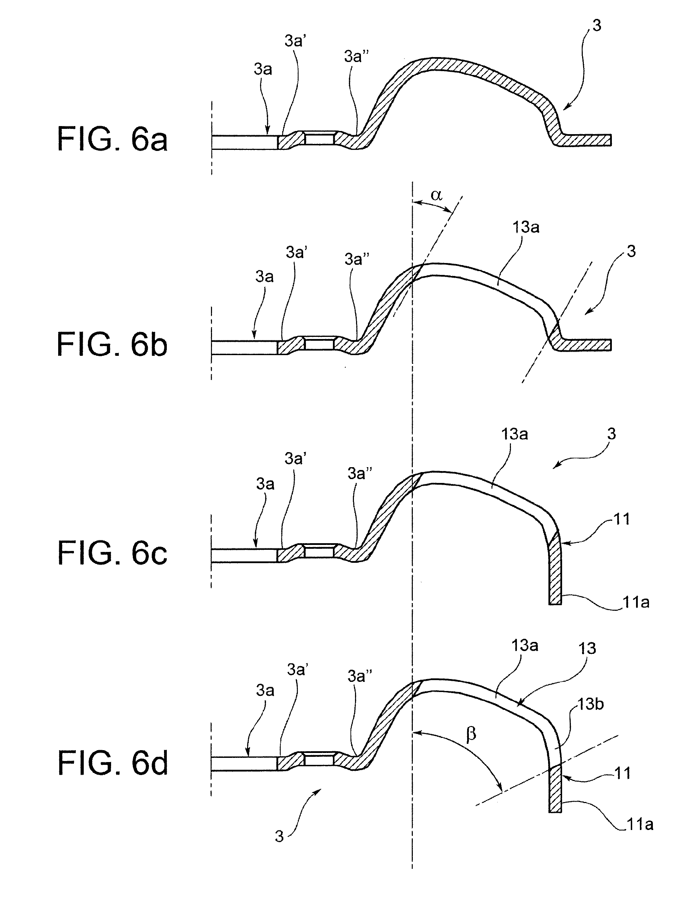

With reference to the Figs. 5, and 6a-d, a disc wheel, for example the disc wheel described above, is produced as follows.

First (Fig. 6a), a partially formed disc is provided, i.e., a disc with an unfinished geometrical profile. By "unfinished geometrical profile" is meant that the disc lacks at least one of the formations (projections, recesses, or folded parts) provided for in the finished form thereof. More specifically, by that it is meant that the geometrical profile of the disc is not still finished in a windowing area of the disc, i.e., the area of the disc intended for the formation of the windows 13. For example, the disc can be considered as partially formed according to the definition of the present invention if it lacks the connecting ring 11, and more specifically the rim connecting portion 11a extending in the direction of the central axis A-A.

The partially formed disc is obtained starting from a metal sheet, particularly a flat metal sheet, by one or more preliminary forming operations, particularly cold forming, and cutting (for example, punching). According to an embodiment of the invention, the partially formed disc obtained by such operations is a disc defining the central axis A-A, provided with a plurality of angularly spaced-apart spoke formations 3c, 3d.

According to another embodiment of the invention, the partially formed disc is formed so as to have already the central portion 3a with the assembling portion 3a' and the joining portion 3a", and/or the formations associated to each spoke, i.e., the spoke ribs 3c and the spoke webs 3d. According to a further embodiment of the invention, the disc may lack one or more of the structures indicated above.

The disc is then subjected to a first material removing operation (Fig. 6b) to produce a plurality of first window portions 13a angularly spaced-apart in the disc. The term "material removing" comprises any type of technique, particularly cold processing, that allows removing material from the disc to produce an opening thereon, for example, cutting, laser or plasma cutting, punching, machining operations, etc.

In the example illustrated in Fig. 6b, the material removing operation is configured as a punching operation, in which the operative direction of the punch is inclined by a preset angle α with respect to the central axis A-A direction. The punch may act from the outer side or the inner side of the disc.

According to an embodiment of the invention, the first material removing operation may take place in multiple stages (for example, multiple punching stages, optionally according to different operative directions), with the creation of multiple sub-window portions cooperating to define the first window portion 13a.

After the first material removing operation, the disc is subjected to at least one finish forming operation, particularly a cold forming, to produce in the disc a finishing of the geometrical profile of the disc at the disc windowing area, i.e., the disc area intended to the creation of the windows 13. According to an embodiment of the invention, the finish forming operation produces (at least) the rim connecting portion 11a (Fig. 6c). According to another embodiment of the invention, such a forming operation can further provide the creation of those formations (projections, recesses, or folded parts) not obtained during the preliminary forming operation. Therefore, the substantial finishing of the geometrical profile of the disc is obtained (except for optional secondary formations having a reduced extent).

After the finish forming operation, the disc is subjected to a second material removing operation to produce a plurality of second window portions 13b angularly spaced-apart (Fig. 6d) at the windowing area of the disc, each of the second window portions 13b cooperating with a respective one of the first window portions 13a to define a corresponding window 13 comprised between a pair of adjacent spokes and a peripheral portion of the disc. Again, the term "material removing" comprises any type of technique, particularly of cold processing, which allows removing material from the disc to produce an opening thereon, for example cutting, laser or plasma cutting, punching, machining operation, etc. The term "peripheral portion of the disc" comprises the connecting ring 11, the rim connecting portion 11a, or an innermost portion of the disc, in the case that it is provided for the windows 13 not to reach the connecting ring 11.

In the example illustrated in Fig. 6d, the material removing operation is configured as a punching operation, in which the operative direction of the punch is inclined by a preset angle β with respect to the direction of the central axis A-A, possibly different from the angle α of the first punching operation. The punch can act from the outer or the inner sides of the disc.

According to an embodiment of the invention, the second material removing operation may take place in multiple stages (for example, multiple punching stages, possibly according to different operative directions), with the creation of multiple sub-window portions cooperating to define the second window portion 13b.

It is thereby obtained a disc with a finished geometrical profile, provided with the windows 13. The central opening 7 and the holes 8 for the tightening bolts are produced in further processing steps (which are not the object of the invention), which, according to the manufacturing conditions, may be provided before, during, or after the operations detailed above.

In Fig. 7, an advantageous embodiment of the invention is illustrated, in which a coining operation of the edge of such a window portion is carried out simultaneously to a punching operation for producing a window portion. To this aim, a punch P provided for the production by punching of a window portion 13a is provided with a peripheral coining portion P1, formed to implement a chamfer 13c on the edge of the window portion. Such a chamfer allows hindering the onset and propagation of cracks that could limit the fatigue resistance of the component.

## Claims

1. A method for producing a disc (3) of a vehicle wheel, **characterized by** comprising the following steps:
- providing a partially formed disc defining a central axis (A-A);
- subjecting the disc to at least one first material removing operation to produce a plurality of first window portions (13a) angularly spaced-apart in the disc;
- after said first material removing operation, subjecting the disc to at least one finish forming operation to finish the geometrical profile of the disc in a windowing area of the disc; and **characterized by**
- after said finish forming operation, subjecting the disc to at least one second material removing operation to produce a plurality of second window portions (13b) angularly spaced-apart in said windowing area of the disc, each of the second window portions cooperating with a respective one of the first window portions to define a corresponding window (13) comprised between a pair of adjacent spokes (3b) and a peripheral portion (11) of the disc.

2. A method according to claim 1, wherein said finish forming operation produces at least one rim connecting portion (11a) intended to be connected to a wheel rim and substantially extending in the direction of said central axis.

3. A method according to claim 1 or 2, wherein providing the partially formed disc comprises the following steps:
- providing a flat metal sheet; and
- subjecting the flat metal sheet to at least one cutting operation and at least one preliminary forming operation to produce a disc defining a central axis (A-A) and provided with a plurality of angularly spaced-apart spoke formations (3c, 3d).

4. A method according to any of the preceding claims, wherein at least one of said material removing operations comprises a punching operation done simultaneously with coining to produce a chamfer (13c) on the edge of said first or second window portion.

5. Method for producing a vehicle wheel (1), comprising the following steps:
- providing a rim (2);
- producing a disc (3) with a method according to any of the preceding claims; and
- securing said rim and disc together to produce said wheel.

## Patentansprüche

1. Ein Verfahren zum Herstellen einer Scheibe (3) eines Fahrzeugrads, **dadurch gekennzeichnet, dass** dasselbe folgende Schritte aufweist:
- Bereitstellen einer teilweise geformten Scheibe, die eine Mittelachse (A-A) definiert;
- Unterziehen der Scheibe zu zumindest einem ersten Materialentfernungsschritt, um eine Mehrzahl von ersten Fensterabschnitten (13a) zu erzeugen, die in der Scheibe winkelmäßig beabstandet sind;
- nach dem ersten Materialentfernungsschritt, Unterziehen der Scheibe zu zumindest einem Fertigungsstellungsformungsschritt, um das geometrische Profil der Scheibe in einem Fensterungsbereich der Scheibe fertigzustellen; und
**gekennzeichnet durch**
- nach dem Fertigungsstellungsformungsschritt, Unterziehen der Scheibe zu zumindest einem zweiten Materialentfernungsschritt, um eine Mehrzahl von zweiten Fensterabschnitten (13b) zu erzeugen, die in dem Fensterungsbereich der Scheibe winkelmäßig beabstandet sind, wobei jeder der zweiten Fensterabschnitte mit einem jeweiligen der ersten Fensterabschnitte zusammenwirkt, um ein entsprechendes Fenster (13) zu definieren, das zwischen einem Paar von benachbarten Speichen (3b) und einem Umfangsabschnitt (11) der Scheibe eingeschlossen ist.

2. Ein Verfahren gemäß Anspruch 1, bei dem der Fertigungsstellungsformungsschritt zumindest einen Felgenverbindungsabschnitt (11a) erzeugt, der mit einer Radfelge verbunden werden soll und sich im Wesentlichen in der Richtung der Mittelachse erstreckt.

3. Ein Verfahren gemäß Anspruch 1 oder 2, bei dem das Bereitstellen der teilweise geformten Scheibe die folgenden Schritte aufweist:
- Bereitstellen eines flachen Blechs; und
- Unterziehen des flachen Blechs zu zumindest einem Schneideschritt und zumindest einem vorläufigen Formungsschritt, um eine Scheibe zu erzeugen, die eine Mittelachse (A-A) definiert und mit einer Mehrzahl von winkelmäßig beabstandeten Speichenformungen (3c, 3d) versehen ist.

4. Ein Verfahren gemäß einem der vorhergehenden Ansprüche, bei dem zumindest einer der Materialentfernungsschritte einen Stanzschritt aufweist, der gleichzeitig mit Prägen durchgeführt wird, um an der Kante des ersten oder zweiten Fensterabschnitts eine Abschrägung (13c) zu erzeugen.

5. Verfahren zum Herstellen eines Fahrzeugrads (1), das folgende Schritte aufweist:
- Bereitstellen einer Felge (2);
- Erzeugen einer Scheibe (3) mit einem Verfahren gemäß einem der vorhergehenden Ansprüche; und
- Befestigen der Felge und der Scheibe aneinander, um das Rad herzustellen.

## Revendications

1. Méthode de production d'un disque (3) de roue de véhicule, **caractérisée par** les étapes suivantes :
- fourniture d'un disque partiellement formé définissant un axe central (A-A),
- exposition du disque à au moins une première opération d'enlèvement de matière pour produire un ensemble de premières parties ajourées (13a) espacées angulairement sur le disque,
- après ladite première opération d'enlèvement de matière, exposition du disque à au moins une opération de formage final pour finir le profil géométrique du disque dans une zone ajourée du disque et
**caractérisée par**
- après ladite opération de formage final, exposition du disque à au moins une deuxième opération d'enlèvement de matière pour produire un ensemble de deuxièmes parties ajourées (13b) espacées angulairement dans ladite zone ajourée du disque, chacune des deuxième parties ajourées étant associée à une des premières parties ajourées pour définir une partie ajourée correspondante (13) comprise entre une paire de rayons adjacents (3b) et une partie périphérique (11) du disque.

2. Méthode selon la revendication 1, dans laquelle ladite opération de formage final produit au moins une partie de raccordement de jante (11a) destinée à être raccordée à une jante et se prolongeant sensiblement dans la direction dudit axe central.

3. Méthode selon la revendication 1 ou 2, dans laquelle la fourniture du disque partiellement formé comprend les étapes suivantes :
- fourniture d'une tôle métallique plane et
- exposition de la tôle métallique plane à au moins une opération de coupe et au moins une opération de formage préliminaire pour produire un disque définissant un axe central (A-A) et doté d'un ensemble de formations de rayons espacés angulairement (3c, 3d).

4. Méthode selon une des revendications précédentes, dans laquelle au moins une desdites opérations d'enlèvement de matière comprend une opération de découpe réalisée simultanément avec un matriçage pour produire un chanfrein (13c) sur le bord de ladite première ou deuxième partie ajourée.

5. Méthode de production d'une roue de véhicule (1), comprenant les étapes suivantes :
- fourniture d'une jante (2),
- production d'un disque (3) à l'aide d'une méthode selon une des revendications précédentes et
- assemblage desdits jante et disque pour obtenir ladite roue.
